# EUROPEAN PATENT APPLICATION

(11) **EP 1 335 275 A2**
(43) Date of publication of application: **13.08.2003**
(21) Application number: 03002230.5
(22) Date of filing: 31.01.2003
(51) Int. Cl.: G06F 3/12

(54) **Methods and systems for accessing emails**

(30) Priority: 01.02.2002 US 61010
(71) Applicant: Xerox Corporation, Rochester, New York 14644 (US)
(72) Inventor: Karn, Keith S-, Rochester, NY 14620 (US)
(74) Representative: Grünecker, Kinkeldey, Stockmair & Schwanhäusser Anwaltssozietät

(57) **Abstract**

Methods and systems for accessing email from a printing-capable device via a network connection to a mail server. A user interface is provided at the printing-capable device which enables a user to retrieve email headers from a mail server, to select an email header and to retrieve an email message that corresponds to the selected email header. The printer-capable device then prints the email message.

## Description

The present invention relates generally to methods and systems for accessing email and more particularly to methods and systems for accessing email using a printing-capable device via a network.

Conventional email access requires a user to access a workstation or other terminal, to authenticate with that terminal and subsequently access email using an email program which interacts with a mail server that is networked with the terminal. These users generally are not able to access their email when they are away from their workstations.

The invention is directed to methods and systems for providing email access on any printing-capable device which is networked with a mail server. The user is able to approach the printing-capable device, access a user interface on the device, request access to the user's email and, after authentication, receive access to that email. The device enables the user to retrieve email messages from a mail server and prints out messages selected by the user. The device may also print attachments to the messages.

In embodiments of the present invention, the user may approach a multifunction device such as a copier/printer/scanner, access a user interface which authenticates the user with a user name and password, then use the interface to access the user's email from the user's personal email inbox. The interface may display message headers and enable the user to select headers for which the user desires to view a printout of the entire email message. The device then retrieves email messages that correspond with the selected headers and prints the messages.

Fig. 1 is a schematic representation of a system for accessing email in accordance with the invention;

Fig. 2 is a schematic representation of a user interface for a printing-capable device for accessing email in accordance with the invention; and

Fig. 3 is a flowchart outlining one exemplary control routine in accordance with the invention.

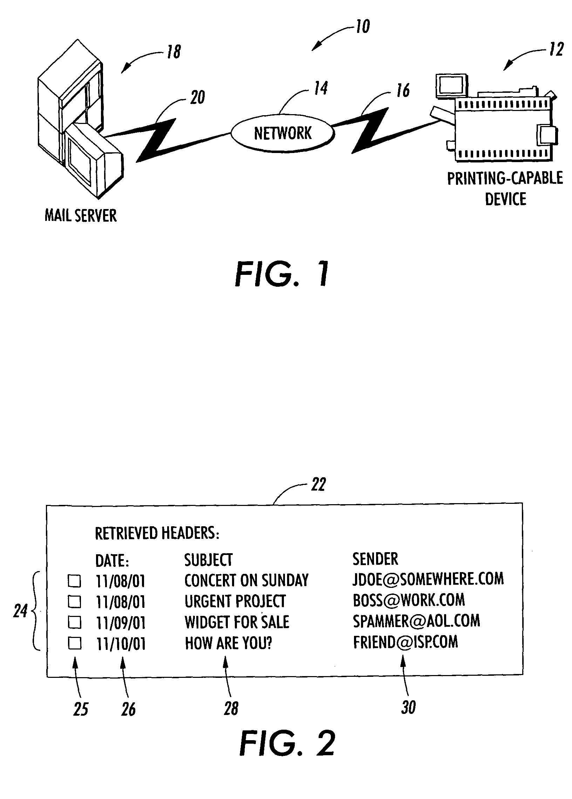

Fig. 1 shows a system 10 for accessing email from a printing-capable device. The system 10 includes a printing-capable device 12 in communication with a network 14 via a communication link 16. The network 14 is in communication with a mail server 18 via a second communication link 20. The printing-capable device 12 includes a monitor 19 which is adapted to display a user-interface 22 for providing access to a user's email inbox which is resident on the mail server 18. The system 10 may or may not also be connected to one or more other systems and/or other distributed networks, as well as one or more other devices 12.

The device 12 may be any device as long as it has the capability of printing an email message. The device 12 may be a copier, a printer, a fax machine and/or a multifunction device and still form a part of the invention.

While Fig. 1 shows the system 10 and associated components collocated, it is to be appreciated that the various components of the system 10 can be located at distant portions of a distributed network, such as a local area network, a wide area network, an intranet and/or the Internet, or within a dedicated system. Thus, it should be appreciated that the components of the system 10 can be combined into one device or collocated on a particular node of a distributed network. As will be appreciated from the following description, and for reasons of computational efficiency, the components of the system 10 can be arranged at any location within a distributed network, except that the printing-capable device would contain the user interface for email retrieval without affecting the operation of the system.

Furthermore, the links 16 and 20 can be wired or wireless links or may also be any known or later developed data transmission links that are capable of supplying electronic data to and from the connected elements.

Fig. 2 shows a user-interface 22 in accordance with the invention. The user-interface 22 provides a listing of message headers 24. In this embodiment, the user-interface 22 displays the date 26, the subject 28 and the sender 30 for each of the e-mail headers 24. A user is able to then select one of the headers 24 using an input device (not shown). For example, the user may use the input device to check the buttons 25 to indicate on the display which email headers 24 have been selected. The input device, which may be, for example, a keyboard, mouse, speech-to-text system, touch-screen, or the like, with the aid of an I/O interface, a memory and a controller, interfaces with the device 12 (Fig. 1). In response to the selection, the printing-capable device 12 retrieves the entire message which corresponds to the selected header 24 from the mail server 18 and prints the message and, optionally, prints out attachments to the message. In order to print attachments, it may be necessary to program the device 12 with the software applications which correspond to those attachments.

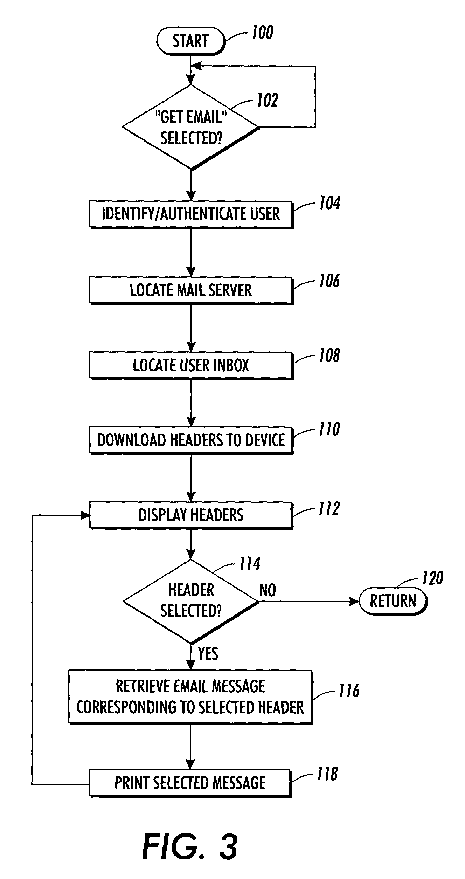

Fig. 3 shows a flowchart outlining a control routine which executes a method in accordance with the invention. The control routine starts at step 100 and continues to step 102. In step 102, the control routine determines whether a user has accessed the "get email" function on the user-interface of the printing-capable device 12. If, in step 102, the control routine determines that the "get email" function has been selected, then the control routine continues to step 104. If, however, in step 102, the control routine determines that the "get email" function has not been selected, then the control routine returns to step 102.

In step 104, the control routine conducts an identify/authenticate user procedure. For example, the routine may accept a user name and password from the user to determine whether the user has the correct security rights to access the appropriate account on the mail server, the control routine may receive the user's name, password, email address, email server and the like. Optionally, the user may have been authenticated by the device 12 for other purposes or the user may have been authenticated before the "get email" function is selected. The control routine then continues to step 106. In step 106, the control routine locates the appropriate mail server 18 via the network 14. The control routine then continues to step 108 where the control routine locates the user's email inbox on the mail server 18 and continues to step 110. In step 110, the control routine downloads the headers from the user's email inbox to the printing-capable device 12 and continues to step 112. In step 112, the control routine displays the headers 24 in a user-interface 22 and continues to step 114. In step 114, the control routine determines whether a header 24 (or multiple headers) has been selected on the user-interface 22. If, in step 114, the control routine determines that a header(s) has been selected, then the control routine continues to step 116. If, however, in step 114, the control routine determines that no header has been selected, then after a set period of time the control routine jumps to step 120. Although in this embodiment, a set period of time is used before going to step 120, other arrangements can be used, such as requesting the user for an input on whether the user would like to proceed to step 120. In step 120, the control routine returns control of the printing-capable device to the control routine in which the control routine of Fig. 3 operates.

In step 116, the control routine retrieves the email message from the mail server 18 that corresponds to the selected header and continues to step 118. In step 118, the control routine prints out the selected message and returns to step 112. Optionally, the control routine may also retrieve any attachments associated with the selected header and also print out the attachments using the corresponding software applications.

While the above description describes access to the methods of the invention via a "get email" function, it is understood that the specific nomenclature for the function is irrelevant to the invention.

The disclosed methods may be readily implemented in software using object-oriented software development environments that provide portable source code that can be used on a variety of printing-capable computer or workstation hardware platforms. Alternatively, the disclosed modeling system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized. The email access systems and methods described above, however, can be readily implemented in hardware and/or software using any known or later-developed printing-capable systems or structures, devices and/or software by those skilled in the applicable art without undue experimentation from the functional description provided herein together with a general knowledge of the computer arts.

Moreover, the disclosed methods may be readily implemented as software executed on a printing-capable, programmed, general-purpose computer, a special purpose printing-capable computer, a microprocessor, or the like. In this instance, the methods and systems of this invention can be implemented as a routine embedded on a printing-capable personal computer such as a Java® or CGI script, as a resource residing on a server or graphics workstation accessible by the printing-capable device, or the like. The email access system can also be implemented by physically incorporating the system and method into a software and/or hardware system, such as the hardware and software systems of a dedicated computer controlled printing-capable system.

## Claims

1. A system comprising a printing-capable device in communication with a mail server, wherein the printing-capable device has a user interface and retrieves email headers from the mail server, receives a user selection of an email header, retrieves an email message corresponding to a selected email header and prints the retrieved email message.

2. The system of claim 1 wherein the printing-capable device is a multifunction device.

3. The system of claim 1 wherein the printing-capable device is a printer.

4. The system of claim 1 wherein the printing-capable device is a copier.

5. The system of claim 1 wherein the printing-capable device is a facsimile machine.

6. The system of claim 1 wherein the network is a local area network.

7. The system of claim 1 wherein the network is a wide area network.

8. The system of claim 1 wherein the network is at least one of an intranet or the Internet.

9. The system of claim 1 wherein the printing-capable device retrieves an attachment associated with the retrieved email message and prints the retrieved attachment.

10. A method comprising:
receiving a get command on a printing-capable device;
locating a mail server via a network in response to the receipt of the get command;
retrieving at least one email header from the mail server;
displaying the at least one email header on the printing-capable device;
determining whether the at least one email header has been selected;
retrieving at least one email message corresponding to the selected email header, if at least one email header has been selected, from the mail server; and
printing the retrieved email message.
